# DEMANDE DE BREVET EUROPEEN

(11) **EP 2 615 313 A1**
(43) Date de publication de la demande: **17.07.2013**
(21) Numéro de dépôt: 13150419.3
(22) Date de dépôt: 07.01.2013
(51) Int. Cl.: F16B 7/20, A62B 35/00

(54) **Dispositif de connexion mécanique pour relier une charge à un support**

(30) Priorité: 10.01.2012 FR 1250235
(71) Demandeur: Wichard, 63300 Thiers (FR)
(72) Inventeur: Guihard, Mathieu, 35400 Saint Malo (FR)
(74) Mandataire: Verriest, Philippe

(57) **Abrégé**

Ce dispositif de connexion comprend un premier élément (3) destiné être relié au support et un deuxième élément (4) destiné être relié à la charge. Le deuxième élément (4) comporte une portion tubulaire (9, 15) adaptée pour accueillir le premier élément (3), des moyens de verrouillage (24) mobiles entre des positions de verrouillage et de déverrouillage des premier et deuxième éléments (3, 4), une bague de commande (25) mobile autour entre une première position dans laquelle elle immobilise les moyens de verrouillage (24) dans leur position de verrouillage, et une deuxième position dans laquelle elle autorise un déplacement des moyens de verrouillage (24) vers leur position de déverrouillage, et un bouton de commande (42a, 42b) mobile entre une première position dans laquelle le bouton de commande coopère avec la portion tubulaire de manière à immobiliser la bague de commande (25) dans sa première position, et une deuxième position dans laquelle le bouton de commande autorise un déplacement de la bague de commande (25) vers sa deuxième position.

## Description

La présente invention concerne un dispositif de connexion mécanique pour relier une charge à un support, et plus particulièrement pour relier un opérateur à un support.

Pour assurer la sécurité d'une personne se déplaçant par exemple sur le pont d'un bateau ou intervenant en hauteur, notamment sur des toits de bâtiments ou autres ouvrages, il est connu d'équiper cette personne d'un harnais de sécurité et de raccorder le harnais de sécurité à un support, tel qu'un point d'ancrage ou à une ligne de vie, par l'intermédiaire d'une longe pourvue, à au moins l'une de ses extrémités, d'un mousqueton de sécurité destiné à être raccordé au support ou au harnais de sécurité.

Ainsi, dans des conditions optimales d'utilisation, la personne peut se déconnecter rapidement et aisément du support en actionnant le mousqueton de sécurité.

Toutefois, un actionnement sous charge du mousqueton de sécurité peut s'avérer difficile voire impossible dans certaines conditions d'utilisation de la longe, par exemple lorsque la personne reliée à la longe est hélitreuillée ou se déplace sur le pont d'un bateau et tombe par-dessus bord, et d'autant plus lorsque le mousqueton de sécurité est à double sécurité. Cet inconvénient peut être très préjudiciable pour l'intégrité physique de la personne raccordée au support.

Afin de pallier cet inconvénient, la longe peut être pourvue, à une première extrémité, d'un mousqueton à ouverture sous charge destiné à être raccordé au harnais de sécurité, et, à une deuxième extrémité, d'un mousqueton de sécurité destiné à être raccordé au support. Une telle longe permet de faciliter l'ouverture sous charge du mousqueton relié au harnais de sécurité, et donc de faciliter la déconnexion de la personne portant le harnais de sécurité.

Cependant, dans certaines conditions d'utilisation, l'ouverture sous charge d'un mousqueton à ouverture sous charge peut s'avérer également difficile voire impossible. De plus, les mousquetons à ouverture sous charge ne présentent généralement qu'une simple sécurité d'ouverture, rendant leur utilisation impossible dans certains domaines d'activité.

La présente invention vise à remédier à ces inconvénients.

Le problème technique à la base de l'invention consiste donc à fournir un dispositif de connexion mécanique qui soit de structure simple et économique, qui permette une déconnexion rapide et aisée sous charge, tout en présentant au moins deux niveaux de sécurité d'ouverture.

A cet effet, la présente invention concerne un dispositif de connexion mécanique pour relier une charge à un support, comprenant un premier élément et un deuxième élément, l'un des premier et deuxième éléments étant adapté pour être relié au support, l'autre des premier et deuxième éléments étant adapté pour être relié à la charge, le deuxième élément comportant :
- une portion tubulaire adaptée pour accueillir le premier élément,
- des moyens de verrouillage montés mobiles sur la portion tubulaire entre une position de verrouillage des premier et deuxième éléments, et une position de déverrouillage des premier et deuxième éléments,
- une bague de commande montée mobile autour de la portion tubulaire entre une première position dans laquelle la bague de commande immobilise les moyens de verrouillage dans leur position de verrouillage, et une deuxième position dans laquelle la bague de commande autorise un déplacement des moyens de verrouillage vers leur position de déverrouillage, et
- au moins un bouton de commande monté sur la bague de commande, le bouton de commande étant mobile par rapport à la bague de commande entre une première position dans laquelle le bouton de commande coopère avec la portion tubulaire de manière à immobiliser la bague de commande dans sa première position, et une deuxième position dans laquelle le bouton de commande autorise un déplacement de la bague de commande vers sa deuxième position.

Ainsi, lorsque les premier et deuxième éléments sont verrouillés l'un sur l'autre, le bouton de commande empêche tout déplacement non souhaité de la bague de commande vers sa deuxième position, ce qui évite tout déverrouillage intempestif du premier élément. Par conséquent, le dispositif de connexion selon l'invention présente une double sécurité d'ouverture.

Lorsqu'un utilisateur souhaite déverrouiller les premier et deuxième éléments, il lui suffit dans un premier temps de déplacer le bouton de commande dans sa deuxième position, et dans un second temps de déplacer la bague de commande vers sa deuxième position. Une telle manipulation du deuxième élément sous charge est aisée et rapide, y compris lorsque l'utilisateur se trouve dans des conditions peu optimales, par exemple après une chute.

Le support peut être par exemple un point d'ancrage, une ligne de vie ou similaire, et la charge peut être par exemple un opérateur ou un chargement. Selon un mode de réalisation de l'invention, l'autre des premier et deuxième éléments est adapté pour être relié à un harnais de sécurité porté par l'opérateur.

Selon un mode de réalisation de l'invention, le premier élément comporte une portion de fixation de forme générale cylindrique destinée à coopérer avec le deuxième élément.

De façon avantageuse, la bague de commande est montée coulissante autour de la portion tubulaire sensiblement parallèlement à l'axe de la portion tubulaire. Le bouton de commande est alors de préférence solidaire en coulissement de la bague de commande.

Selon un mode de réalisation de l'invention, la bague de commande est montée sensiblement fixe en rotation par rapport à la portion tubulaire.

Le bouton de commande comprend par exemple une portion de manipulation montée dans une lumière ménagée dans la bague de commande. Avantageusement, la lumière et la partie de manipulation sont conformées pour rendre solidaires en coulissement le bouton de commande et la bague de commande. Selon un mode de réalisation de l'invention, la lumière délimite au moins une première et une deuxième parois agencée pour coopérer respectivement avec une première et une deuxième parois de la partie de manipulation de manière à rendre solidaires en coulissement le bouton de commande et la bague de commande. De préférence, la lumière recevant le bouton de commande est agencée pour guider le bouton de commande lors des déplacements de ce dernier entre ses première et deuxième positions.

Selon un mode de réalisation de l'invention, la bague de commande est conformée de telle sorte que le bouton de commande est situé, dans sa deuxième position, en retrait par rapport à la surface extérieure de la bague de commande.

Selon un mode de réalisation de l'invention, le deuxième élément comprend un premier et un deuxième boutons de commande décalés angulairement l'un par rapport à l'autre, et par exemple opposés l'un à l'autre par rapport à l'axe de la portion tubulaire.

Selon une caractéristique de l'invention, lorsque la bague de commande est dans sa deuxième position, le bouton de commande est agencé pour coopérer avec la portion tubulaire de manière à être immobilisé dans sa deuxième position.

Avantageusement, le bouton de commande comporte au moins une partie de retenue, et la portion tubulaire comporte au moins une piste de guidage dans laquelle est montée mobile la partie de retenue.

Selon un mode de réalisation de l'invention, la piste de guidage comprend par exemple au moins une première portion de guidage agencée pour coopérer avec la partie de retenue lorsque la bague de commande est dans sa deuxième position de manière à immobiliser le bouton de commande dans sa deuxième position, et une deuxième portion de guidage agencée pour recevoir la partie de retenue lorsque la bague de commande est dans sa première position et pour autoriser un déplacement du bouton de commande vers sa première position. La première portion de guidage peut comporter une paroi de butée agencée pour coopérer avec la partie de retenue de manière à immobiliser le bouton de commande dans sa deuxième position. La deuxième portion de guidage peut comporter au moins une première paroi de butée agencée pour coopérer avec la partie de retenue de manière à immobiliser la bague de commande dans sa première position. De préférence, la deuxième portion de guidage comporte au moins une deuxième paroi de butée agencée pour coopérer avec la partie de retenue de manière à limiter la course de déplacement du bouton de commande vers sa première position.

Selon un mode de réalisation de l'invention, la première portion de guidage s'étend sensiblement parallèlement à l'axe de la portion tubulaire. Selon un mode de réalisation de l'invention, la deuxième portion de guidage s'étend transversalement à partir de la première portion de guidage.

Selon un mode de réalisation de l'invention dans lequel le deuxième élément comprend un premier et un deuxième boutons de commande, la piste de guidage est agencée pour recevoir des parties de retenue des premier et deuxième boutons de commande. Ainsi, la piste de commande comprend avantageusement une première portion de guidage agencée pour coopérer avec les parties de retenue respectives des premier et deuxième boutons de commande lorsque la bague de commande est dans sa deuxième position de manière à immobiliser les premier et deuxième boutons de commande dans leur deuxième position, une deuxième portion de guidage agencée pour recevoir la partie de retenue du premier bouton de commande lorsque la bague de commande est dans sa première position et pour autoriser un déplacement du premier bouton de commande vers sa première position, et une troisième portion de guidage agencée pour recevoir la partie de retenue du deuxième bouton de commande lorsque la bague de commande est dans sa première position et pour autoriser un déplacement du deuxième bouton de commande vers sa première position. De préférence, les deuxième et troisième portions s'étendent à l'opposée l'une de l'autre.

Selon un mode de réalisation de l'invention, le bouton de commande comporte deux parties de retenue, et la portion tubulaire comporte deux pistes de guidage décalées angulairement l'une par rapport à l'autre et dans chacune desquelles est montée mobile l'une des parties de retenue.

Selon un mode de réalisation de l'invention, le bouton de commande est mobile entre ses première et deuxième positions sensiblement radialement par rapport à la bague de commande.

De préférence, le deuxième élément comprend des premiers moyens de rappel agencés pour solliciter le bouton de commande vers sa première position. Les premiers moyens de rappel comportent par exemple un ressort en forme générale de U dont les branches prennent appui contre la portion tubulaire et dont la base prend appui contre le bouton de commande. Les branches du U peuvent par exemple être fixées sur la portion tubulaire.

De façon avantageuse, le deuxième élément comprend des deuxièmes moyens de rappel agencés pour solliciter la bague de commande vers sa première position.

Selon un mode de réalisation de l'invention, la bague de commande comporte au moins une première portion présentant un premier diamètre intérieur et au moins une deuxième portion présentant un deuxième diamètre intérieur supérieur au premier diamètre, la première portion étant agencée pour coopérer avec les moyens de verrouillage et immobiliser ces derniers dans leur position de verrouillage lorsque la bague de commande est dans sa première position, la deuxième portion étant agencée pour autoriser un déplacement des moyens de verrouillage vers leur position de déverrouillage lorsque la bague de commande est dans sa deuxième position.

De préférence, les moyens de verrouillage comportent au moins un organe de verrouillage monté dans un alésage traversant ménagé dans la portion tubulaire du deuxième élément, et déplaçable entre une position de verrouillage dans laquelle il coopère avec le premier élément de manière à verrouiller les premier et deuxième éléments l'un sur l'autre, et une position de déverrouillage.

L'au moins un organe de verrouillage peut être par exemple une bille de verrouillage ou un patin de verrouillage. L'au moins un organe de verrouillage est avantageusement déplaçable radialement entre ses positions de verrouillage et de déverrouillage.

De préférence, l'au moins un organe de verrouillage en position de verrouillage fait saillie à l'intérieur de la portion tubulaire et l'au moins un organe de verrouillage en position de déverrouillage ne fait pas saillie à l'intérieur de la portion tubulaire.

Selon un mode de réalisation de l'invention, les moyens de verrouillage comportent une pluralité d'organes de verrouillage montés chacun dans un alésage traversant ménagé dans la portion tubulaire du deuxième élément, chaque organe de verrouillage étant déplaçable entre une position de verrouillage dans laquelle il coopère avec le premier élément de manière à verrouiller les premier et deuxième éléments l'un sur l'autre, et une position de déverrouillage.

Les moyens de verrouillage peuvent comporter par exemple une première série d'organes de verrouillage et une deuxième série d'organes de verrouillage décalées axialement l'une par rapport à l'autre.

Selon un mode de réalisation de l'invention, le deuxième élément comporte une bague de blocage montée mobile dans la portion tubulaire entre une première position dans laquelle la bague de blocage coopère avec au moins un organe de verrouillage de manière à bloquer ledit au moins un organe de verrouillage dans sa position de déverrouillage, et une deuxième position dans laquelle la bague de blocage autorise un déplacement dudit au moins un organe de verrouillage vers sa position de verrouillage, ledit au moins un organe de verrouillage, en position de déverrouillage, étant agencé pour coopérer avec la bague de commande de manière à immobiliser la bague de commande dans sa deuxième position, et ledit au moins un organe de verrouillage, en position de verrouillage, étant agencé pour libérer la bague de commande et autoriser un déplacement de la bague de commande vers sa première position. La bague de blocage peut être montée coulissante dans la portion tubulaire sensiblement parallèlement à l'axe de la portion tubulaire.

Le deuxième élément comprend de façon avantageuse des troisièmes moyens de rappel agencés pour solliciter la bague de blocage vers sa première position.

De préférence, le premier élément comporte une portion d'actionnement agencée pour coopérer avec la bague de blocage et déplacer cette dernière vers sa deuxième position lorsque la portion tubulaire accueille le premier élément.

Selon un mode de réalisation de l'invention, le premier élément comporte au moins une gorge annulaire adaptée pour recevoir les moyens de verrouillage en position de verrouillage des premier et deuxième éléments. Le premier élément peut comporter par exemple une première et une deuxième gorges annulaires décalées axialement l'une par rapport à l'autre, et les moyens de verrouillage peuvent par exemple comporter une première série d'organes de verrouillage et une deuxième série d'organes de verrouillage décalées axialement l'une par rapport à l'autre, les organes de verrouillage de la première série étant agencés pour être reçus dans la première gorge annulaire et les organes de verrouillage de la deuxième série étant agencés pour être reçus dans la deuxième gorge annulaire.

De préférence, la bague de blocage est agencée pour coopérer avec les organes de verrouillage de la première série.

Selon un mode de réalisation de l'invention, la bague de commande comporte au moins une rampe inclinée ménagée sur la surface intérieure de la bague de commande et agencée pour solliciter les moyens de verrouillage vers leur position de verrouillage lors du déplacement de la bague de commande vers sa première position.

Selon une première alternative de réalisation de l'invention, la portion tubulaire comporte un corps tubulaire sur lequel sont montés les moyens de verrouillage, et une bague de guidage fixée sensiblement coaxialement sur le corps tubulaire, le bouton de commande étant agencé pour coopérer, dans sa première position, avec la bague de guidage de manière à immobiliser la bague de commande dans sa première position.

Avantageusement, la piste de guidage est ménagée sur la bague de guidage.

Selon un mode de réalisation de l'invention, les deuxièmes moyens de rappel comportent au moins un ressort de rappel, par exemple hélicoïdal, prenant appui d'une part sur la bague de guidage et d'autre part sur la bague de commande. De préférence, la bague de guidage comprend au moins un logement agencé pour recevoir au moins en partie le ressort de rappel.

Selon un mode de réalisation de l'invention, la bague de guidage est formée par une première et une deuxième demi-bagues fixées l'une sur l'autre, par exemple par l'intermédiaire d'au moins un ergot ménagé sur l'une des première et deuxième demi-bagues et agencé pour être logé dans un logement complémentaire prévu sur l'autre des première et deuxième demi-bagues.

Selon une deuxième alternative de réalisation de l'invention, la portion tubulaire pourrait être formée par un corps tubulaire monobloc.

Selon un mode de réalisation de l'invention, la bague de commande est formée par une première et une deuxième demi-bagues fixées l'une sur l'autre, par exemple par l'intermédiaire d'au moins un ergot ménagé sur l'une des première et deuxième demi-bagues et agencé pour être logé dans un logement complémentaire prévu sur l'autre des première et deuxième demi-bagues.

Le deuxième élément comporte avantageusement des moyens de butée agencés pour limiter la course de déplacement de la bague de commande vers sa première position, et de préférence des moyens de butée agencés pour limiter la course de déplacement de la bague de blocage vers sa première position.

De préférence, la bague de commande comprend au moins un anneau de renfort, par exemple métallique, agencé pour coopérer avec les moyens de verrouillage lorsque la bague de commande est dans sa première position.

De toute façon, l'invention sera bien comprise à l'aide de la description qui suit en référence au dessin schématique annexé représentant, à titre d'exemples non limitatifs, deux formes d'exécution de ce dispositif de connexion mécanique.
Figure 1 est une vue éclatée en perspective d'un dispositif de connexion mécanique selon l'invention.
Figure 2 est une vue en perspective du dispositif de connexion mécanique de la figure 1 en conditions d'utilisation.
Figure 3 est une vue en perspective du dispositif de connexion mécanique de la figure 1 en position déverrouillée.
Figure 4 est une vue en coupe transversale du dispositif de connexion mécanique de la figure 1 en position déverrouillée.
Figures 5 et 6 sont des vues en coupe longitudinale du dispositif de connexion mécanique de la figure 1 en position déverrouillée.
Figure 7 est une vue en perspective du dispositif de connexion mécanique de la figure 1 en position verrouillée.
Figures 8 et 9 sont des vues en coupe longitudinale du dispositif de connexion mécanique de la figure 1 en position verrouillée.
Figure 10 est une vue en coupe transversale du dispositif de connexion mécanique de la figure 1 en position verrouillée.
Figure 11 est une vue en perspective d'une demi-bague formant une bague de guidage du dispositif de connexion mécanique de la figure 1.
Figure 12 est une vue en coupe longitudinale d'un dispositif de connexion mécanique selon un deuxième mode de réalisation de l'invention.

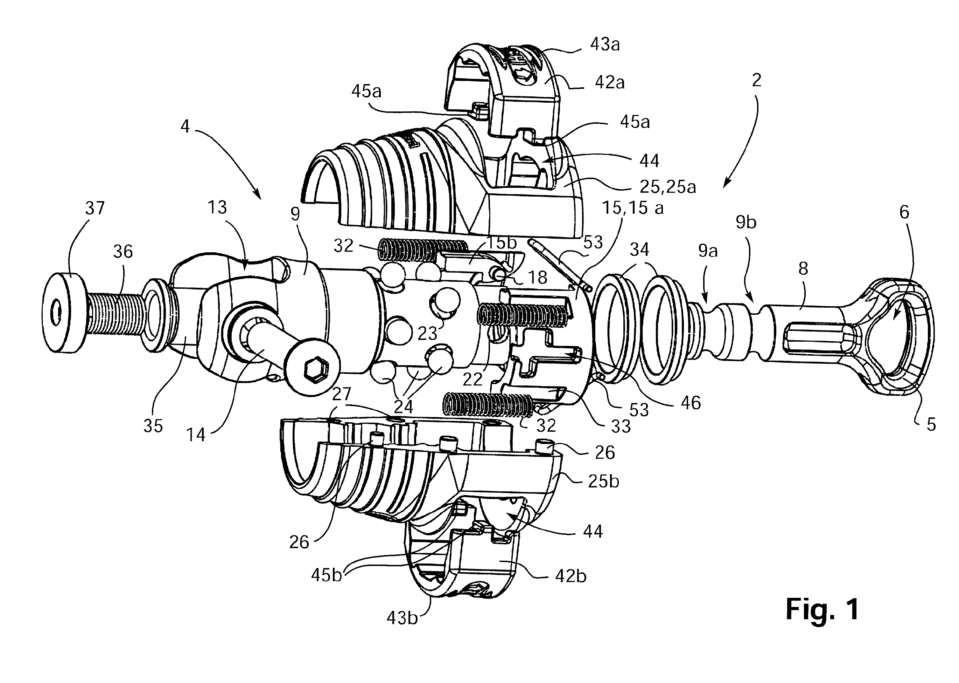

Les figures 1 à 10 représentent un dispositif de connexion mécanique 2 pour relier une charge à un support selon un premier mode de réalisation de l'invention. Le dispositif de connexion mécanique 2 comporte un premier élément 3 destiné à être relié à un support, tel qu'un point d'ancrage, une ligne de vie ou similaire, et un deuxième élément 4 destiné à être relié à une charge, telle qu'un opérateur ou un chargement. Le deuxième élément 4 est plus particulièrement destiné à être relié à un harnais de sécurité porté par l'opérateur.

Le premier élément 3 comporte une portion de montage 5 pourvue d'un oeillet de montage 6 destiné au montage d'un lien mécanique 7, tel qu'un cordage ou une sangle, raccordé directement ou indirectement au support. Le premier élément 3 comporte en outre une portion de fixation 8 de forme générale cylindrique destinée à coopérer avec le deuxième élément 4. La portion de fixation 8 comporte une première et une deuxième gorges annulaires 9a, 9b décalées axialement l'une par rapport à l'autre.

Le deuxième élément 4 comporte un corps tubulaire 9 comprenant une portion de montage 11 destinée au montage d'un lien mécanique 12, tel qu'un cordage ou une sangle, raccordé directement ou indirectement à la charge. La portion de montage 11 comporte par exemple un passant 13 et une tige filetée 14 mobile entre une position de fermeture dans laquelle la tige filetée ferme le passant et une position d'ouverture dans laquelle la tige filetée rend accessible le passant.

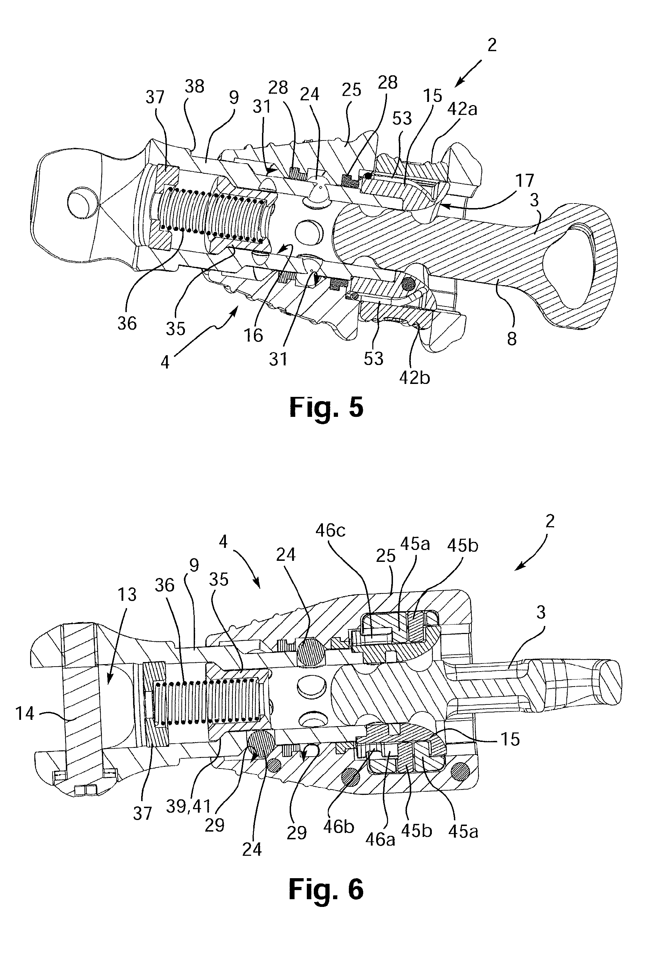

Le deuxième élément 4 comporte en outre une bague de guidage 15 fixée coaxialement sur le corps tubulaire 9. Le corps tubulaire 9 et la bague de guidage 15 délimitent un conduit de fixation 16 adapté pour accueillir la portion de fixation 8 du premier élément 3. Comme montré plus particulièrement sur la figure 5, la bague de guidage 15 comprend avantageusement une portion évasée 17 afin de faciliter l'insertion de la portion de fixation 8 du premier élément 3 dans le conduit de fixation 16.

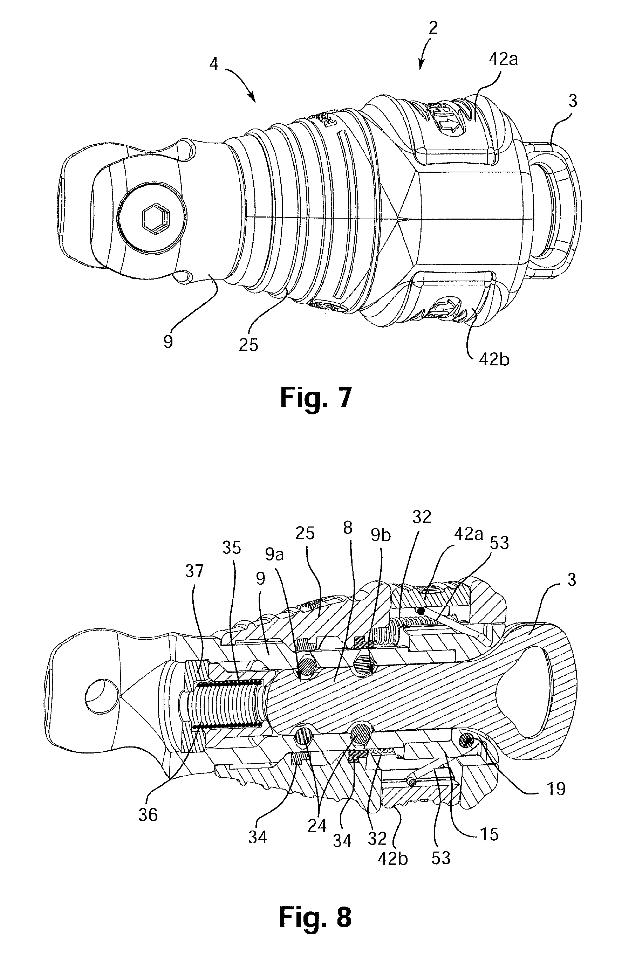

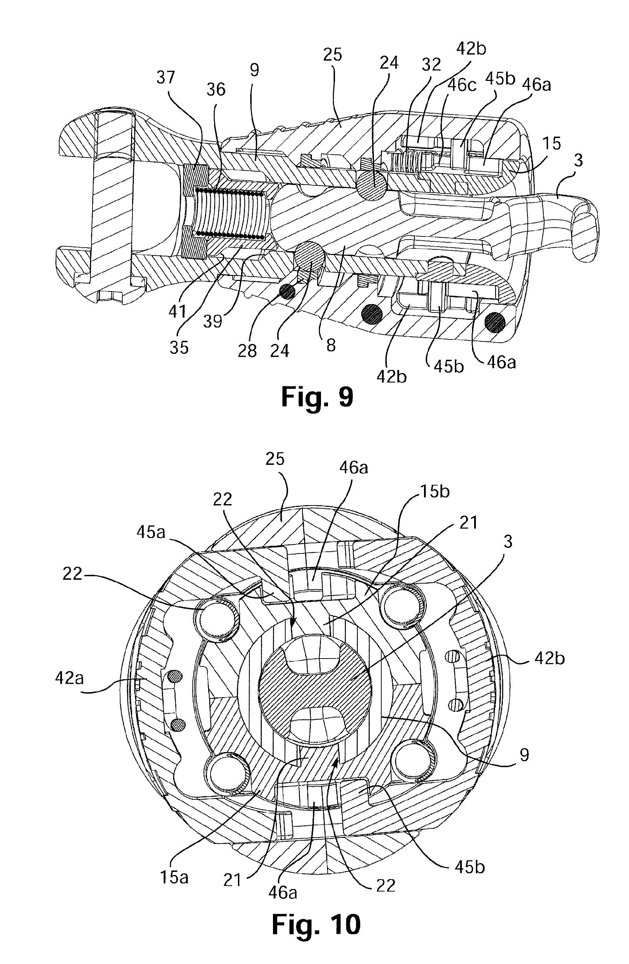

Selon un mode de réalisation de l'invention, la bague de guidage 15 est formée par deux demi-bagues 15a, 15b fixées l'une sur l'autre. Comme montré sur les figures 1 et 8, chaque demi-bague 15a, 15b comporte par exemple un premier ergot de fixation 18 agencé pour être logé dans un logement complémentaire 19 prévu sur l'autre demi-bague. Comme montré notamment sur la figure 10, chaque demi-bague 15a, 15b comporte en outre un deuxième ergot de fixation 21 agencé pour être logé dans un logement complémentaire 22 prévu sur le corps tubulaire 9.

Le corps tubulaire 9 comporte plusieurs alésages 23 ménagés radialement à travers la paroi du corps tubulaire 9. Chaque alésage 23 forme un logement pour une bille de verrouillage 24. Le deuxième élément 4 comporte plus particulièrement une première série de billes de verrouillage 24 et une deuxième série de billes de verrouillage 24 décalées axialement l'une par rapport à l'autre.

Chaque bille de verrouillage 24 est déplaçable radialement entre une position de verrouillage (montrée sur les figures 8 et 9) dans laquelle elle fait saillie à l'intérieur du corps tubulaire 9 et une position de déverrouillage (montrée sur les figures 5 et 6) dans laquelle elle ne fait pas saillie à l'intérieur du corps tubulaire 9. Les billes de verrouillage 24 de la première série sont destinées à être reçues, en position de verrouillage, dans la première gorge annulaire 9a ménagée sur la portion de fixation 8 du premier élément 3, tandis que les billes de verrouillage 24 de la deuxième série sont destinées à être reçues, en position de verrouillage, dans la deuxième gorge annulaire 9b ménagée sur la portion de fixation 8 du premier élément 3.

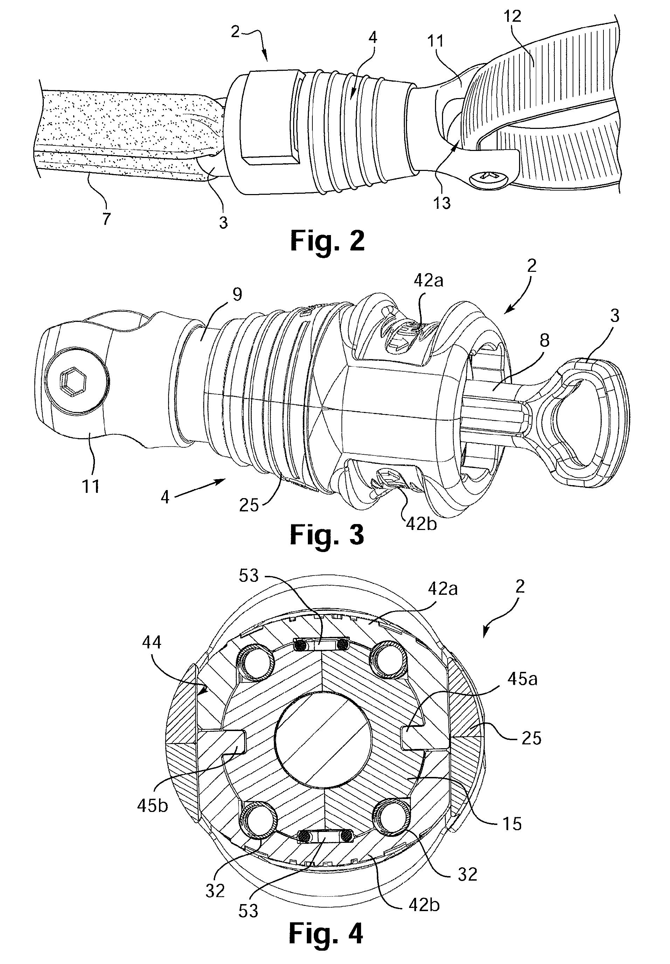

Le deuxième élément 4 comporte de plus une bague de commande 25 montée coulissante autour du corps tubulaire 9 et de la bague de guidage 15 selon l'axe du corps tubulaire 9 entre une première position (montrée sur les figures 7 à 9) dans laquelle la bague de commande 25 sollicite chaque bille de verrouillage 24 vers sa position de verrouillage, et une deuxième position (montrée sur les figures 3, 5 et 6) dans laquelle la bague de commande 25 autorise un déplacement de chaque bille de verrouillage 24 vers sa position de déverrouillage. La bague de commande 25 est de préférence montée sensiblement fixe en rotation par rapport au corps tubulaire 9.

Selon un mode de réalisation de l'invention, la bague de commande 25 est formée par deux demi-bagues 25a, 25b fixées l'une sur l'autre. Chaque demi-bague 25a, 25b comporte par exemple plusieurs ergots de fixation 26 agencé pour être logés respectivement dans des logements complémentaires 27 prévus sur l'autre demi-bague.

La bague de commande 25 comporte, sur sa surface intérieure, deux nervures annulaires 28 décalées axialement l'une par rapport à l'autre, et deux gorges annulaires 29 décalées axialement l'une par rapport à l'autre. Comme montré sur les figures 8 et 9, les nervures annulaires 28 sont agencées pour coopérer avec les billes de verrouillage 24 et immobiliser ces dernières dans leur position de verrouillage lorsque la bague de commande 25 est dans sa première position. Comme montré sur les figures 5 et 6, les gorges annulaires 29 sont agencées pour autoriser un déplacement des billes de verrouillage 24 vers leur position de déverrouillage lorsque la bague de commande 25 est dans sa deuxième position.

La bague de commande 25 comporte en outre deux rampes inclinées 31 ménagées sur la surface intérieure de la bague de commande 25 et disposées respectivement entre l'une des gorges annulaires 29 et l'une des nervures annulaires 28. Chaque rampe inclinée 31 est agencée pour solliciter les billes de verrouillage 24 correspondantes vers leur position de verrouillage lors du déplacement de la bague de commande 25 vers sa première position.

Le deuxième élément 4 comporte en outre une pluralité de ressorts de rappel 32, de préférence hélicoïdaux, agencés pour solliciter la bague de commande 25 vers sa première position. Chaque ressort de rappel 25 comporte une première extrémité prenant appui contre la bague de guidage 15, et une deuxième extrémité prenant appui contre la bague de commande 25. La bague de guidage 25 comprend de préférence une pluralité de logements 33 ménagés sur sa surface extérieure et agencés pour recevoir chacun en partie l'un des ressorts de rappel 32.

Selon un mode de réalisation non représenté sur les figures, les ressorts de rappel 32 pourraient être remplacés par un unique ressort de rappel hélicoïdal monté autour de la bague de guidage 15 et/ou du corps tubulaire 9.

De préférence, la bague de commande 25 comprend deux anneaux de renfort 34, par exemple métallique, agencé pour coopérer avec les billes de verrouillage 24 lorsque la bague de commande 25 est dans sa première position, et formés en partie les nervures annulaires 28.

Le deuxième élément 4 comporte également une bague de blocage 35 montée coulissante dans le corps tubulaire 9 selon l'axe de ce dernier entre une première position (montrée sur les figures 5 et 6) dans laquelle la bague de blocage 35 sollicite chaque bille de verrouillage 24 de la première série vers sa position de déverrouillage, et une deuxième position (montrée sur les figures 8 et 9) dans laquelle la bague de blocage 35 autorise un déplacement de chaque bille de verrouillage 24 de la première série vers sa position de verrouillage.

Le deuxième élément 4 comporte de plus un ressort de rappel 36, de préférence hélicoïdal, agencé pour solliciter la bague de blocage 35 vers sa première position. Le ressort de rappel 36 comporte une première extrémité prenant appui contre un organe d'appui 37 fixé en translation suivant l'axe du corps tubulaire 9, et une deuxième extrémité prenant appui contre la bague de blocage 35. L'organe d'appui 37 peut être fixé sur le corps tubulaire 9 par exemple par collage ou vissage, ou être monté en force dans celui-ci.

Il doit être noté que les billes de verrouillage 24 de la première série sont agencées d'une part pour immobiliser la bague de commande 25 dans sa deuxième position lorsque la bague de blocage 35 est dans sa première position, et d'autre part pour libérer la bague de commande 25 lorsque la bague de blocage 35 est déplacée vers sa deuxième position.

Le deuxième élément 4 comporte des premiers moyens de butée agencés pour limiter la course de déplacement de la bague de commande 25 vers sa première position, et des deuxièmes moyens de butée agencés pour limiter la course de déplacement de la bague de blocage 35 vers sa première position. Les premiers moyens de butée comportent un épaulement 38 ménagé sur la surface extérieure du corps tubulaire 9 et agencé pour coopérer avec une paroi d'extrémité de la bague de commande 25. Les deuxièmes moyens de butée comportent un épaulement 39 ménagé sur la surface intérieure du corps tubulaire 9 et agencé pour coopérer avec un épaulement complémentaire 41 ménagé sur la surface extérieure de la bague de blocage 35.

Le deuxième élément 4 comprend en outre un premier et un deuxième boutons de commande 42a, 42b décalés angulairement l'un par rapport à l'autre, et par exemple opposés l'un à l'autre par rapport à l'axe du corps tubulaire 9.

Chaque bouton de commande 42a, 42b comprend une portion de manipulation 43a, 43b montée dans une lumière 44 ménagée dans la bague de commande 25. Les parties de manipulation 43a, 43b des boutons de commande 42a, 42b et les lumières 44 correspondantes sont conformées pour rendre solidaires en coulissement les boutons de commande 42a, 42b et la bague de commande 25.

Chaque bouton de commande 42a, 42b est mobile radialement par rapport à la bague de commande 25 entre une première position (représentée sur les figures 7 à 9) dans laquelle le bouton de commande 42a, 42b coopère avec la bague de guidage 15 de manière à immobiliser la bague de commande 25 dans sa première position, et une deuxième position (représentée sur les figures 3, 5 et 6) dans laquelle le bouton de commande 42a, 42b autorise un déplacement de la bague de commande 25 vers sa deuxième position. De préférence, chaque lumière 44 est agencée pour guider le bouton de commande 42a, 42b correspondant lors des déplacements de ce dernier entre ses première et deuxième positions.

Comme montré sur les figures 5 et 6, la bague de commande 25 est avantageusement conformée de telle sorte que chaque bouton de commande 42a, 42b est situé en retrait par rapport à la surface extérieure de la bague de commande lorsqu'il se trouve dans sa deuxième position.

Chaque bouton de commande 42a, 42b comporte en outre deux doigts de retenue 45a, 45b décalés axialement l'un par rapport à l'autre, tournés l'un vers l'autre et s'étendant sensiblement parallèlement l'un par rapport à l'autre. La bague de guidage 15 comprend deux pistes de guidage 46 ménagées sur sa surface extérieure et décalées angulairement l'une par rapport à l'autre. Chaque piste de guidage 46 est agencée pour recevoir l'un des doigts de retenue 45a, 45b de chaque bouton de commande 42a, 42b.

Chaque piste de commande 46 comprend avantageusement une première portion de guidage 46a agencée pour coopérer avec les doigts de retenue 45a, 45b respectifs des boutons de commande 42a, 42b lorsque la bague de commande 25 est dans sa deuxième position (comme cela est montré sur la figure 6) de manière à immobiliser les deux boutons de commande 42a, 42b dans leur deuxième position, une deuxième portion de guidage 46b agencée pour recevoir le doigt de retenue respectif 45a du premier bouton de commande 42a lorsque la bague de commande 25 est dans sa première position et pour autoriser un déplacement du premier bouton de commande 42a vers sa première position, et une troisième portion de guidage 46c agencée pour recevoir le doigt de retenue respectif 45b du deuxième bouton de commande 42b lorsque la bague de commande 25 est dans sa première position et pour autoriser un déplacement du deuxième bouton de commande 42b vers sa première position. De préférence, les deuxième et troisième portions de guidage 46b, 46c de chaque piste de guidage 46 s'étendent à l'opposée l'une de l'autre.

La première portion de guidage 46a de chaque piste de guidage 46 comporte une paroi de butée 47 agencée pour coopérer avec le doigt de retenue 45a, 45b respectif de chaque bouton de commande 42a, 42b de manière à immobiliser les boutons de commande 42a, 42b dans leur deuxième position. Les deuxième et troisième portions de guidage 46b, 46c de chaque piste de guidage 46 comportent avantageusement chacune une première paroi de butée 48, 49 agencée pour coopérer avec le doigt de retenue 45a, 45b du bouton de commande 42a, 42b respectif de manière à immobiliser la bague de commande 25 dans sa première position. De préférence, les deuxième et troisième portions de guidage 46b, 46c de chaque piste de guidage 46 comportent chacune une deuxième paroi de butée 51, 52 agencée pour coopérer avec le doigt de retenue 45a, 45b du bouton de commande 42a, 42b respectif de manière à limiter la course de déplacement du bouton de commande 42a, 42b respectif vers sa première position.

La première portion de guidage 46a de chaque piste de guidage 46 s'étend sensiblement parallèlement à l'axe du corps tubulaire 9, et les deuxième et troisième portions de guidage 46b, 46c de chaque piste de guidage 46 s'étendent sensiblement perpendiculairement à partir de la première portion de guidage 46a respective.

Le deuxième élément 4 comprend également un ressort de rappel 53 associé à chaque bouton de commande 42a, 42b et agencé pour solliciter le bouton de commande 42a, 42b respectif vers sa première position. Chaque ressort de rappel 53 présente par exemple une forme générale de U dont les branches prennent appui contre la surface extérieure de la bague de guidage 15 et dont la base prend appui contre le bouton de commande 42a, 42b respectif.

Le fonctionnement du dispositif de connexion 2 va maintenant être décrit ci-après en supposant qu'initialement la bague de blocage 35 est dans sa première position, les billes de verrouillage 24 de la première série sont dans leur position de déverrouillage, la bague de commande 25 est dans sa deuxième position, les boutons de commande 42a, 42b sont dans leur deuxième position, les doigts de retenue 45a, 45b des boutons de commande sont reçus dans les premières portions de guidage 46a des pistes de guidage 46 respectives, et les premier et deuxième éléments 3, 4 sont déverrouillés. Dans cette situation initiale, l'état du dispositif de connexion est celui illustré par les figures 3 à 6.

Lorsqu'un utilisateur souhaite verrouiller le premier élément 3 sur le deuxième élément, il insère la portion de fixation 8 du premier élément 3 dans le conduit de fixation 16 du deuxième élément 4. Au cours de cette insertion de la portion de fixation 8 dans le conduit de fixation 16, l'extrémité libre de la portion de fixation 8 vient en contact contre la bague de blocage 35, et déplace ensuite la bague de blocage 35 vers sa deuxième position à l'encontre de la force de rappel exercée par le ressort de rappel 36.

L'insertion de la portion de fixation 8 dans le conduit de fixation 16 se poursuit jusqu'à ce que les billes de verrouillage 24 des première et deuxième séries se trouvent en regard des gorges annulaires 9a, 9b respectives et soient poussées radialement dans les gorges annulaires respective par les rampes inclinées 31 correspondantes de la bague de commande 25. Un tel déplacement des billes de verrouillage 24 vers les gorges annulaires 9a, 9b provoque une libération de la bague de commande 25, qui est alors sollicitée vers sa première position par les ressorts de rappel 32.

Lors du déplacement de la bague de commande 25 vers sa première position, les boutons de commande 42a, 42b sont entraînés avec cette dernière et les doigts de retenue 45a, 45b des boutons de commande 42a, 42b coulissent dans les premières portions de guidage 46a des pistes de guidage 46 respectives.

Lorsque la bague de commande 25 vient en butée contre l'épaulement 38 ménagé sur le corps tubulaire 9, les nervures annulaires 28 de la bague de commande 25 coopèrent avec les billes de verrouillage 24 et immobilisent ces dernières dans leur position de verrouillage, comme cela est montré sur les figures 8 et 9. Il en résulte un verrouillage des premier et deuxième éléments.

En outre, lorsque la bague de commande 25 vient en butée contre l'épaulement 38 ménagé sur le corps tubulaire 9, les doigts de retenue 45a, 45b des boutons de commande 42a, 42b se retrouvent en regard des deuxième et troisième portions de guidage 46b, 46c des pistes de guidage 46 respectives. Chaque bouton de commande 42a, 42b est alors sollicité vers sa première position par le ressort de rappel 53 respectif.

Lorsqu'un utilisateur souhaite déverrouiller le premier élément 3, il exerce dans un premier temps une pression sur chaque bouton de commande 42a, 42b de manière à les déplacer dans leur deuxième position, et ce, de telle sorte que les doigts de retenue 45a, 45b des boutons de commande 42a, 42b se retrouvent en regard des premières portions de guidage 46a des pistes de guidage 46 respectives, et il déplace dans un second temps la bague de commande 25 axialement vers sa deuxième position. Les billes de verrouillage 24 des première et deuxième séries se retrouvent alors en regard respectivement des première et deuxième gorges annulaires 29 de la bague de commande 25 et sont donc libres de se déplacer vers leur position de déverrouillage. Les billes de verrouillage 24 sont alors repoussées radialement vers leur position de déverrouillage par le premier élément 3. Il en résulte un déverrouillage du premier élément 3 et la possibilité de retirer le premier élément 3 du conduit de fixation 16.

Lors du retrait du premier élément 3 du conduit de fixation 16, la bague de blocage 35 est sollicitée par le ressort de rappel 36 vers sa première position et bloque les billes de verrouillage 24 de la première série dans leur position de déverrouillage de manière à immobiliser la bague de commande 25 dans sa deuxième position.

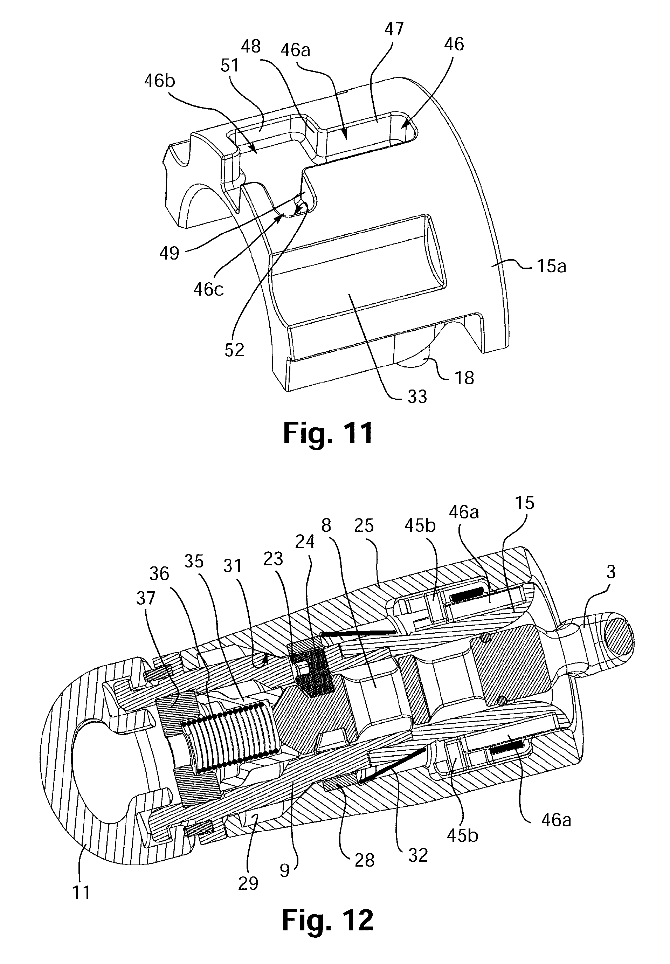

La figure 12 représente un dispositif de connexion mécanique 2 selon un deuxième mode de réalisation de l'invention qui diffère de celui représenté sur les figures 1 à 11 essentiellement en ce que les billes de verrouillage 24 sont remplacées par des patins de verrouillage 24 montés coulissants radialement dans des alésages 23 ménagés dans le corps tubulaire 9, en ce que la bague de commande 25 ne comporte qu'une seule série de patins de verrouillage 24, et en ce que la portion de montage 11 est montée amovible par rapport au corps tubulaire 9. En particulier, la portion de montage 11 est mobile en rotation par rapport au corps tubulaire 9 entre une position de fixation de la portion de montage sur le corps tubulaire 9 et une position de démontage de la portion de montage.

Selon un autre mode de réalisation de l'invention, le premier élément 3 pourrait être relié à la charge et le deuxième élément pourrait être relié au support.

Comme il va de soi, l'invention ne se limite pas aux seules formes d'exécution de ce dispositif de connexion mécanique, décrites ci-dessus à titre d'exemples, elle en embrasse au contraire toutes les variantes de réalisation.

## Revendications

1. Dispositif de connexion mécanique (2) pour relier une charge à un support, comprenant un premier élément (3) et un deuxième élément (4), l'un des premier et deuxième éléments étant adapté pour être relié au support, l'autre des premier et deuxième éléments étant adapté pour être relié à la charge, le deuxième élément (4) comportant :
- une portion tubulaire (9, 15) adaptée pour accueillir le premier élément (3),
- des moyens de verrouillage (24) montés mobiles sur la portion tubulaire entre une position de verrouillage des premier et deuxième éléments (3, 4), et une position de déverrouillage des premier et deuxième éléments (3, 4),
- une bague de commande (25) montée mobile autour de la portion tubulaire (9, 15) entre une première position dans laquelle la bague de commande (25) immobilise les moyens de verrouillage (24) dans leur position de verrouillage, et une deuxième position dans laquelle la bague de commande (25) autorise un déplacement des moyens de verrouillage (24) vers leur position de déverrouillage, et
- au moins un bouton de commande (42a) monté sur la bague de commande (25), le bouton de commande (42a) étant mobile par rapport à la bague de commande (25) entre une première position dans laquelle le bouton de commande coopère avec la portion tubulaire de manière à immobiliser la bague de commande (25) dans sa première position, et une deuxième position dans laquelle le bouton de commande autorise un déplacement de la bague de commande (25) vers sa deuxième position.

2. Dispositif de connexion selon la revendication 1, dans lequel la bague de commande (25) est montée coulissante autour de la portion tubulaire (9, 15) sensiblement parallèlement à l'axe de la portion tubulaire.

3. Dispositif de connexion selon la revendication 2, dans lequel le bouton de commande (42a) est solidaire en coulissement de la bague de commande (25).

4. Dispositif de connexion selon l'une des revendications 1 à 3, dans lequel le bouton de commande (42a) comprend une portion de manipulation (43a) montée dans une lumière (44) ménagée dans la bague de commande (25).

5. Dispositif de connexion selon l'une des revendications 1 à 4, dans lequel, lorsque la bague de commande (25) est dans sa deuxième position, le bouton de commande (42a) est agencé pour coopérer avec la portion tubulaire (9, 15) de manière à être immobilisé dans sa deuxième position.

6. Dispositif de connexion selon l'une des revendications 1 à 5, dans lequel le bouton de commande (42a) comporte au moins une partie de retenue (45a), et la portion tubulaire (9, 15) comporte au moins une piste de guidage (46) dans laquelle est montée mobile la partie de retenue (45a).

7. Dispositif de connexion selon la revendication 6, dans lequel la piste de guidage (46) comprend au moins une première portion de guidage (46a) agencée pour coopérer avec la partie de retenue (45a) lorsque la bague de commande (25) est dans sa deuxième position de manière à immobiliser le bouton de commande (42a) dans sa deuxième position, et une deuxième portion de guidage (46b) agencée pour recevoir la partie de retenue (45a) lorsque la bague de commande (25) est dans sa première position et pour autoriser un déplacement du bouton de commande (42a) vers sa première position.

8. Dispositif de connexion selon la revendication 7, dans lequel la première portion de guidage (46a) comporte une paroi de butée (47) agencée pour coopérer avec la partie de retenue (45a) de manière à immobiliser le bouton de commande (42a) dans sa deuxième position.

9. Dispositif de connexion selon la revendication 7 ou 8, dans lequel la deuxième portion de guidage (46b) comporte au moins une première paroi de butée (48) agencée pour coopérer avec la partie de retenue (45a) de manière à immobiliser la bague de commande (25) dans sa première position.

10. Dispositif de connexion selon l'une des revendications 1 à 9, dans lequel le deuxième élément (4) comprend des premiers moyens de rappel (53) agencés pour solliciter le bouton de commande (42a) vers sa première position.

11. Dispositif de connexion selon l'une des revendications 1 à 10, dans lequel le deuxième élément (4) comprend des deuxièmes moyens de rappel (32) agencés pour solliciter la bague de commande (25) vers sa première position.

12. Dispositif de connexion selon l'une des revendications 1 à 11, dans lequel les moyens de verrouillage comportent au moins un organe de verrouillage (24) monté dans un alésage traversant (23) ménagé dans la portion tubulaire (9, 15) du deuxième élément, et déplaçable entre une position de verrouillage dans laquelle il coopère avec le premier élément (3) de manière à verrouiller les premier et deuxième éléments l'un sur l'autre, et une position de déverrouillage.

13. Dispositif de connexion selon la revendication 12, dans lequel le deuxième élément (4) comporte une bague de blocage (35) montée mobile dans la portion tubulaire (9, 15) entre une première position dans laquelle la bague de blocage (35) coopère avec au moins un organe de verrouillage (24) de manière à bloquer ledit au moins un organe de verrouillage (24) dans sa position de déverrouillage, et une deuxième position dans laquelle la bague de blocage (35) autorise un déplacement dudit au moins un organe de verrouillage (24) vers sa position de verrouillage, ledit au moins un organe de verrouillage, en position de déverrouillage, étant agencé pour coopérer avec la bague de commande (25) de manière à immobiliser la bague de commande (25) dans sa deuxième position, et ledit au moins un organe de verrouillage, en position de verrouillage, étant agencé pour libérer la bague de commande (25) et autoriser un déplacement de la bague de commande (25) vers sa première position.

14. Dispositif de connexion selon la revendication 13, dans lequel le premier élément (3) comporte une portion d'actionnement (8) agencée pour coopérer avec la bague de blocage (35) et déplacer cette dernière vers sa deuxième position lorsque la portion tubulaire (9, 15) accueille le premier élément (3).

15. Dispositif de connexion selon l'une des revendications 1 à 14, dans lequel la portion tubulaire comporte un corps tubulaire (9) sur lequel sont montés les moyens de verrouillage (24), et une bague de guidage (15) fixée sensiblement coaxialement sur le corps tubulaire (9), le bouton de commande (42a) étant agencé pour coopérer, dans sa première position, avec la bague de guidage (15) de manière à immobiliser la bague de commande (25) dans sa première position.
